(19) Europäisches Patentamt / European Patent Office / Office européen des brevets

(11) **EP 4 407 894 A1**

(12) **EUROPEAN PATENT APPLICATION**
published in accordance with Art. 153(4) EPC

(43) Date of publication:
**31.07.2024 Bulletin 2024/31**

(21) Application number: **22900040.1**

(22) Date of filing: **19.09.2022**

(51) International Patent Classification (IPC):
**H04B 10/516** (2013.01)    **H04B 10/60** (2013.01)
**H04J 14/06** (2006.01)

(52) Cooperative Patent Classification (CPC):
**H04B 10/516; H04B 10/60; H04J 14/02;**
**H04J 14/06**

(86) International application number:
**PCT/CN2022/119627**

(87) International publication number:
**WO 2023/098232 (08.06.2023 Gazette 2023/23)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **30.11.2021 CN 202111446802**

(71) Applicant: **Huawei Technologies Co., Ltd.**
**Shenzhen, Guangdong 518129 (CN)**

(72) Inventors:
• **GAN, Lin**
**Shenzhen, Guangdong 518129 (CN)**
• **GUO, Qiang**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **OPTICAL SIGNAL TRANSMISSION METHOD, PILOT RECEIVER, AND TRANSMITTER**

(57)    Embodiments of this application disclose an optical signal sending method, a pilot receiver, and a transmitter, and relate to the field of optical communication technologies. The method includes: modulating an optical signal in a first state of polarization to obtain a first pilot signal; modulating the optical signal in a second state of polarization to obtain a second pilot signal, where a phase of the first pilot signal is different from a phase of the second pilot signal; and outputting a modulated optical signal. According to this application, this may reduce interference of a pilot signal transferred to an optical signal of another wavelength due to Raman power transfer effect.

```
                                                                              501
  Obtain a first state of polarization and a second state of polarization of
                        an optical signal
                              │
                              ▼
                                                                              502
  Perform modulation in the first state of polarization to obtain a first
       pilot signal, and perform modulation in the second state of
    polarization to obtain a second pilot signal, where a phase of the first
     pilot signal is different from a phase of the second pilot signal
                              │
                              ▼
                                                                              503
             Send a modulated optical signal
```

FIG. 5

## Description

This application claims priority to Chinese Patent Application No. 202111446802.1, filed on November 30, 2021 and entitled "OPTICAL SIGNAL SENDING METHOD, PILOT RECEIVER, AND TRANSMITTER", which is incorporated herein by reference in its entirety.

## TECHNICAL FIELD

This application relates to the field of optical communication, and in particular, to an optical signal sending method, a pilot receiver, and a transmitter.

## BACKGROUND

A wavelength division multiplexing (wavelength division multiplexing, WDM) system can couple various optical signals of different wavelengths in a same optical fiber for transmission. Currently, the WDM system is widely used in optical communication. To enable the WDM system to work stably and reliably, it is necessary to effectively monitor power of an optical signal transmitted in each wavelength channel in the WDM system, to analyze performance of the wavelength channel.

Currently, a commonly used monitoring method is a pilot-tone-based method. In the WDM system, a transmitter emits optical signals of different wavelengths, modulates an optical signal of each wavelength to obtain a pilot signal, and modulates the optical signals of different wavelengths to obtain pilot signals with different pilot frequencies. A modulated optical signal is transmitted in the optical fiber, and amplified by an amplifier every specific distance. A portion of an amplified optical signal (for example, 5% to 10% of the optical signal) is input to a pilot receiver through an optical coupler. For each pilot frequency, the pilot receiver obtains power of the pilot frequency through calculation, and then obtains power of a corresponding optical signal. This implements performance analysis of each wavelength channel in the WDM system.

However, due to Raman power transfer effect in the optical fiber, optical power of a short-wavelength optical signal is transferred to optical power of a long-wavelength optical signal. If an optical signal of a wavelength f is dropped at a node, the optical signal of the wavelength should not be transmitted in an optical fiber after the node. However, due to the Raman power transfer effect, power of a pilot frequency corresponding to the wavelength f is transferred to a long-wavelength optical signal. In this case, the pilot receiver may still subsequently obtain the power of the pilot frequency corresponding to the wavelength f, and then obtain power of the optical signal of the wavelength f through calculation. However, the optical signal of the wavelength f is not transmitted in this segment of optical fiber, resulting in a monitoring error. Therefore, there is an urgent need for a solution to reduce interference of a pilot signal transferred to an optical signal of another wavelength due to the Raman power transfer effect.

## SUMMARY

Embodiments of this application provide an optical signal sending method and a pilot receiver, to reduce interference of a pilot signal transferred to an optical signal of another wavelength due to Raman power transfer effect. Technical solutions are as follows.

According to a first aspect, an optical signal sending method is provided. The method may be implemented by using a transmitter in a wavelength division multiplexing system. The method includes: modulating an optical signal in a first state of polarization to obtain a first pilot signal; modulating the optical signal in a second state of polarization to obtain a second pilot signal, where a phase of the first pilot signal is different from a phase of the second pilot signal; and outputting a modulated optical signal.

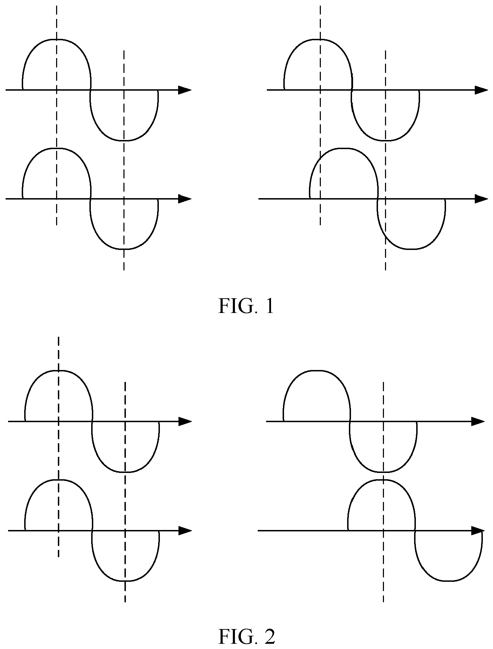

In the solution shown in this embodiment of this application, it is assumed that an optical signal of a first wavelength is modulated to obtain a pilot signal with a first frequency and an optical signal of a second wavelength is modulated to obtain a pilot signal with a second frequency. In a procedure of transmission through an optical fiber, Raman power transfer occurs between the optical signal of the first wavelength and the optical signal of the second wavelength. Power of the optical signal of the first wavelength is partially transferred to power of the optical signal of the second wavelength. Correspondingly, the pilot signal with the first frequency is also transferred to the optical signal of the second wavelength. According to a related technology, pilot signals obtained through modulation on an optical signal in two states of polarization are in-phase. Therefore, when the in-phase pilot signals with the first frequency are transferred to the second optical signal, superposition shown in the left figure of FIG. 1 occurs, in other words, wave peaks are superposed. However, according to the solution provided in this application, the pilot signals obtained through modulation on the optical signal in the two states of polarization are out of phase. Therefore, when the out-of-phase pilot signals with the first frequency are transferred to the second optical signal, superposition shown in the right figure of FIG. 1 occurs, in other words, wave peaks are staggered. The two cases in FIG. 1 are compared. It can be learned that in the solution provided in this application, when Raman power transfer occurs, power obtained after pilot signal superposition is less than power obtained after pilot signal superposition in the related technology. In other words, the solution of this application may reduce, to some extent, interference of a pilot signal transferred to an optical signal of another wavelength due to Raman power transfer effect.

In a possible implementation, phases of the first pilot signal and the second pilot signal are reverse.

That the phases are reverse means that the phases are completely out of phase, or that a phase difference is 180° (represented as π in a radian measure).

It is assumed that in the procedure of transmission through the optical fiber, Raman power transfer occurs between the optical signal of the first wavelength and the optical signal of the second wavelength. The pilot signal with the first frequency is also transferred to the optical signal of the second wavelength. If the pilot signals obtained through modulation on the optical signal in the two states of polarization are in-phase according to the related technology, when the in-phase pilot signals with the first frequency are transferred to the second optical signal, superposition shown in the left figure of FIG. 2 occurs, in other words, wave peaks are superposed. However, according to the solution provided in this application, when the phases of the first pilot signal and the second pilot signal are reverse, and when the out-of-phase pilot signals with the first frequency are transferred to the second optical signal, superposition shown in the right figure of FIG. 2 occurs, in other words, a wave peak and a wave trough meet, so that the two pilot signals cancel out each other. The two cases in FIG. 2 are compared. It can be learned that in the solution provided in this application, when Raman power transfer occurs, the two pilot signals with the same frequency cancel out each other. In other words, the solution of this application may reduce, to some extent, or even eliminate interference of a pilot signal transferred to an optical signal of another wavelength due to Raman power transfer effect.

In a possible implementation, phases of pilot signals obtained through modulation in the first state of polarization and the second state of polarization in a same subband are reverse.

In a possible implementation, phases of pilot signals obtained through modulation in the first state of polarization in subbands are all reverse to phases of pilot signals obtained through modulation in the second state of polarization in the subbands.

In a possible implementation, phases of pilot signals obtained through modulation in the first state of polarization in a first subband to an $N^{th}$ subband are reverse to phases of second pilot signals obtained through modulation in the second state of polarization in the first subband to the $N^{th}$ subband. Phases of pilot signals obtained through modulation in the first state of polarization in an $(N+1)^{th}$ subband to a last subband are reverse to phases of pilot signals obtained through modulation in the second state of polarization in the $(N+1)^{th}$ subband to the last subband. N is a positive integer.

In a possible implementation, a phase of a pilot signal obtained through modulation in the first state of polarization in an $A^{th}$ subband is reverse to a phase of a pilot signal obtained through modulation in the second state of polarization in the $A^{th}$ subband. A phase of a pilot signal obtained through modulation in the first state of polarization in a $B^{th}$ subband is reverse to a phase of a pilot signal obtained through modulation in the second state of polarization in the $B^{th}$ subband. A is an odd number and B is an even number, or A is an even number and B is an odd number.

According to a second aspect, a pilot receiver is provided. The pilot receiver includes a polarization-maintaining power splitter, a first polarizer, a second polarizer, a first photoelectric detector, a second photoelectric detector, and a processor.

The polarization-maintaining power splitter is configured to receive an input optical signal, output a first optical signal to the first polarizer, and output a second optical signal to the second polarizer. States of polarization of the first optical signal are the same as those of the second optical signal and the input optical signal. Power of the first optical signal is the same as that of the second optical signal.

The first polarizer is configured to perform filtering on the states of polarization of the first optical signal, and output, to the first photoelectric detector, a third optical signal obtained through filtering on the states of polarization. The second polarizer is configured to perform filtering on the states of polarization of the second optical signal, and output, to the second photoelectric detector, a fourth optical signal obtained through filtering on the states of polarization. A polarization direction of the first polarizer is not orthogonal to a polarization direction of the second polarizer;

The first photoelectric detector is configured to convert the third optical signal into a first electrical signal, and output the first electrical signal to the processor. The second photoelectric detector is configured to convert the fourth optical signal into a second electrical signal, and output the second electrical signal to the processor.

The processor is configured to process the first electrical signal and the second electrical signal to obtain power corresponding to a pilot frequency of an optical signal of each wavelength in the input optical signal.

In a possible implementation, a range of an included angle between the polarization direction of the first polarizer and the polarization direction of the second polarizer is 40° to 50°, for example, the included angle is 45°.

In a possible implementation, the first polarizer is a 0° polarizer, and the second polarizer is a 45° polarizer.

In a possible implementation, the processor is further configured to determine information about RSOP of the input optical signal based on the first electrical signal and the second electrical signal.

In a possible implementation, the processor is further configured to determine a polarization dependent loss PDL of the input optical signal based on the first electrical signal and the second electrical signal.

In a possible implementation, the pilot receiver further includes a third polarizer and a third photoelectric detector. A polarization angle of the third polarizer is greater than a polarization angle of the polarizer and less than a second polarization angle.

The polarization-maintaining power splitter is further configured to output a fifth optical signal to the third polarizer. States of polarization of the fifth optical signal are the same as those of the first optical signal, the second optical signal, and the input optical signal. Power of the fifth optical signal is the same as that of the first optical signal and the second optical signal

The third polarizer is configured to perform filtering on the states of polarization of the fifth optical signal, and output, to the third photoelectric detector, a sixth optical signal obtained through filtering on the states of polarization. The third photoelectric detector is configured to convert the sixth optical signal into a third electrical signal, and output the third electrical signal to the processor. The processor is configured to process the first electrical signal, the second electrical signal, and the third electrical signal to obtain the power of a pilot signal corresponding to the optical signal of each wavelength in the input optical signal.

In a possible implementation, the polarization angle of the third polarizer is half of the included angle between the polarization direction of the first polarizer and the polarization direction of the second polarizer.

In a possible implementation, the pilot receiver further includes a circular-to-linear polarization converter, a fourth polarizer, and a fourth photoelectric detector.

The polarization-maintaining power splitter is further configured to output a seventh optical signal to the circular-to-linear polarization converter. States of polarization of the seventh optical signal are the same as those of the first optical signal, the second optical signal, and the input optical signal. Power of the seventh optical signal is the same as that of the first optical signal and the second optical signal.

The circular-to-linear polarization converter is configured to convert a state of elliptical polarization of the seventh optical signal into a state of linear polarization, and output, to the fourth polarizer, an eighth optical signal obtained through conversion. The fourth polarizer is configured to convert the eighth optical signal into a fourth electrical signal, and output the fourth electrical signal to the processor.

The processor is configured to process the first electrical signal, the second electrical signal, and the fourth electrical signal to obtain power corresponding to a pilot frequency of an optical signal of each wavelength in the input optical signal.

In a possible implementation, the circular-to-linear polarization converter is a quarter-wave plate.

In a possible implementation, a polarization angle of the fourth polarizer is the same as the polarization angle of the first polarizer or the polarization angle of the second polarizer.

In a possible implementation, the processor is configured to: perform Fourier transform on the first electrical signal to obtain first sub-power corresponding to the pilot frequency of the optical signal of each wavelength in the input optical signal; perform Fourier transform on the second electrical signal to obtain second sub-power corresponding to the pilot frequency of the optical signal of each wavelength in the input optical signal; and obtain, for each pilot frequency, based on first sub-power and second sub-power that correspond to the pilot frequency, actual power corresponding to the pilot frequency.

According to a third aspect, a pilot receiver is provided. The pilot receiver includes a polarization controller, a polarization beam splitter, a first photoelectric detector, a second photoelectric detector, and a processor.

The polarization controller is configured to receive an optical signal, perform polarization scrambling on the optical signal, and output an optical signal obtained after polarization scrambling to the polarization beam splitter.

The polarization beam splitter is configured to: polarize and split the optical signal obtained after polarization scrambling to obtain a first optical signal and a second optical signal, output the first optical signal to the first photoelectric detector, and output the second optical signal to the second photoelectric detector. The first optical signal is orthogonal to the second optical signal.

The first photoelectric detector is configured to convert the first optical signal into a first electrical signal, and output the first electrical signal to the processor.

The second photoelectric detector is configured to convert the second optical signal into a second electrical signal, and output the second electrical signal to the processor.

The processor is configured to process the first electrical signal and the second electrical signal to obtain power of a pilot signal corresponding to an optical signal of each wavelength in the input optical signal.

In a possible implementation, the processor is further configured to determine information about RSOP of the input optical signal based on the first electrical signal and the second electrical signal.

In a possible implementation, the processor is further configured to determine a PDL of the input optical signal based on the first electrical signal and the second electrical signal.

According to a fourth aspect, a pilot receiver is provided. The pilot receiver includes a polarization-maintaining power splitter, a polarization rotator, a first polarization beam splitter, a second polarization beam splitter, a first photoelectric detector, a second photoelectric detector, a third photoelectric detector, a fourth photoelectric detector, and a processor.

The polarization-maintaining power splitter is configured to receive an input optical signal, output a first optical signal to the polarization rotator, and output a second optical signal to the first polarization beam splitter. States of polarization of the first optical signal are the same as those of the second optical signal and the input optical signal. Power of the first optical signal is the same as that of the second optical signal.

The polarization rotator is configured to rotate polarization of the first optical signal to obtain a third optical signal, and send the third optical signal to the second polarization beam splitter.

The first polarization beam splitter is configured to: polarize and split the second optical signal to obtain a fourth optical signal and a fifth optical signal, output the fourth optical signal to the first photoelectric detector, and output the fifth optical signal to the second photoelectric detector.

The second polarization beam splitter is configured to: polarize and split the third optical signal to obtain a sixth optical signal and a seventh optical signal, output the sixth optical signal to the third photoelectric detector, and output the seventh optical signal to the fourth photoelectric detector.

The first photoelectric detector is configured to convert the fourth optical signal into a first electrical signal, and output the first electrical signal to the processor.

The second photoelectric detector is configured to convert the fifth optical signal into a second electrical signal, and output the second electrical signal to the processor.

The third photoelectric detector is configured to convert the sixth optical signal into a third electrical signal, and output the third electrical signal to the processor.

The fourth photoelectric detector is configured to convert the seventh optical signal into a fourth electrical signal, and output the fourth electrical signal to the processor.

The processor is configured to process the first electrical signal, the second electrical signal, the third electrical signal, and the fourth electrical signal to obtain power of a pilot signal corresponding to an optical signal of each wavelength in the input optical signal.

In a possible implementation, the polarization rotator is a 45° polarization rotator.

In a possible implementation, the processor is configured to:

add the first electrical signal and the second electrical signal to obtain a fifth electrical signal;
add the third electrical signal and the fourth electrical signal to obtain a sixth electrical signal;
perform Fourier transform on the fifth electrical signal to obtain first sub-power corresponding to a pilot frequency of the optical signal of each wavelength in the input optical signal;
perform Fourier transform on the sixth electrical signal to obtain second sub-power corresponding to the pilot frequency of the optical signal of each wavelength in the input optical signal; and
obtain, for each pilot frequency, based on first sub-power and second sub-power that correspond to the pilot frequency, actual power corresponding to the pilot frequency.

In a possible implementation, the processor is further configured to determine information about RSOP of the input optical signal based on the first electrical signal, the second electrical signal, the third electrical signal, and the fourth electrical signal.

In a possible implementation, the processor is further configured to determine a PDL of the input optical signal based on the first electrical signal, the second electrical signal, the third electrical signal, and the fourth electrical signal.

According to a fifth aspect, a transmitter is provided. The transmitter includes a signal transmitter and a modulator.

The signal transmitter is configured to send an optical signal.

The modulator is configured to: modulate the optical signal in a first state of polarization to obtain a first pilot signal; modulate the optical signal in a second state of polarization to obtain a second pilot signal, where a phase of the first pilot signal is different from a phase of the second pilot signal; and output a modulated optical signal.

## BRIEF DESCRIPTION OF DRAWINGS

FIG. 1 is a schematic diagram of a pilot signal according to an embodiment of this application;
FIG. 2 is a schematic diagram of a pilot signal according to an embodiment of this application;
FIG. 3 is a schematic diagram of a WDM system according to an embodiment of this application;
FIG. 4 is a schematic diagram of Raman power transfer according to an embodiment of this application;
FIG. 5 is a flowchart of an optical signal sending method according to an embodiment of this application;
FIG. 6 is a schematic diagram of a structure of a transmitter according to an embodiment of this application;
FIG. 7 is a schematic diagram of a structure of a transmitter according to an embodiment of this application;
FIG. 8 is a schematic diagram of pilot signals with reverse phases according to an embodiment of this application;
FIG. 9 is a schematic diagram of pilot signals with reverse phases according to an embodiment of this application;
FIG. 10 is a schematic diagram of pilot signals with reverse phases according to an embodiment of this application;
FIG. 11 is a schematic diagram of a structure of a pilot receiver according to an embodiment of this application;
FIG. 12 is a schematic diagram of a structure of a pilot receiver according to an embodiment of this application;
FIG. 13 is a schematic diagram of a structure of a pilot receiver according to an embodiment of this application;

FIG. 14 is a schematic diagram of a structure of a pilot receiver according to an embodiment of this application;

FIG. 15 is a schematic diagram of a structure of a pilot receiver according to an embodiment of this application; and

FIG. 16 is a schematic diagram of a structure of a pilot receiver according to an embodiment of this application.

## DESCRIPTION OF EMBODIMENTS

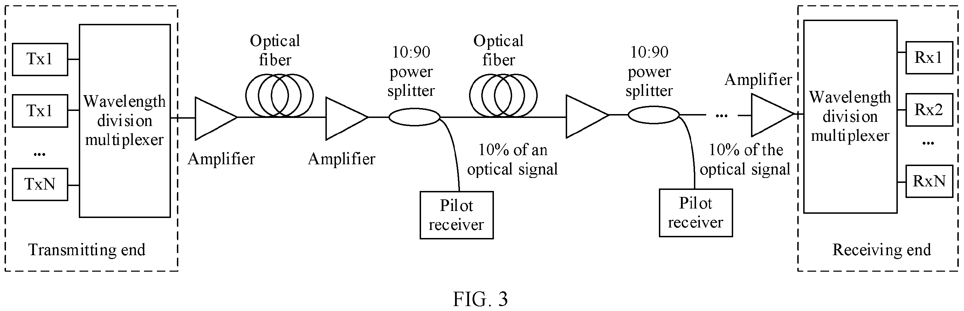

Embodiments of this application provide an optical signal sending method. The method may be applied to a wavelength division multiplexing (wavelength division multiplexing, WDM) system. Refer to FIG. 3. In the WDM system, a transmitting end may include a plurality of transmitters, for example, Tx1, Tx2, ..., and TxN, and may further include a wavelength division multiplexer. Correspondingly, a receiving end may include a plurality of receivers, for example, Rx1, Rx2, Rx3, ..., and RxN, and may further include a wavelength division multiplexer. A transmission link between the transmitting end and the receiving end may be an optical fiber. Amplifiers, power splitters, and the like may be disposed on the transmission link

The transmitters modulate optical signal to obtain service signals and pilot signals, and send modulated optical signals. The optical signals are combined into a beam through the wavelength division multiplexer, and the beam is amplified by the amplifier. The beam is then transmitted through the optical fiber. In a procedure of transmission through the optical fiber, the optical signal may be amplified by the amplifiers every a specific distance. For example, the amplifiers may be disposed on the optical fiber every 80 kilometers (km) to amplify the optical signal. The power splitter may split the amplified optical signal, and a part of the amplified optical signal enters the pilot receiver. For example, the power splitter is a 10:90 power splitter. The 10:90 power splitter may split the amplified optical signal, and 10% of the amplified optical signal enters the pilot receiver. Finally, the optical signal is transmitted to the receiving end, and is split into N optical signals by the wavelength division splitter. The N optical signals are separately output to the receivers. The receivers process the input optical signals.

The following briefly describes the pilot signals and Raman power transfer.

For example, three transmitters at the transmitting end may respectively send optical signals of wavelengths $\lambda_1$, $\lambda_2$, and $\lambda_3$. The transmitter modulates the optical signal of the wavelength $\lambda_1$ to obtain a pilot signal with a frequency $f_1$. The transmitter modulates the optical signal of the wavelength $\lambda_2$ to obtain a pilot signal with a frequency $f_2$. The transmitter modulates the optical signal of the wavelength $\lambda_3$ to obtain a pilot signal with a fre-

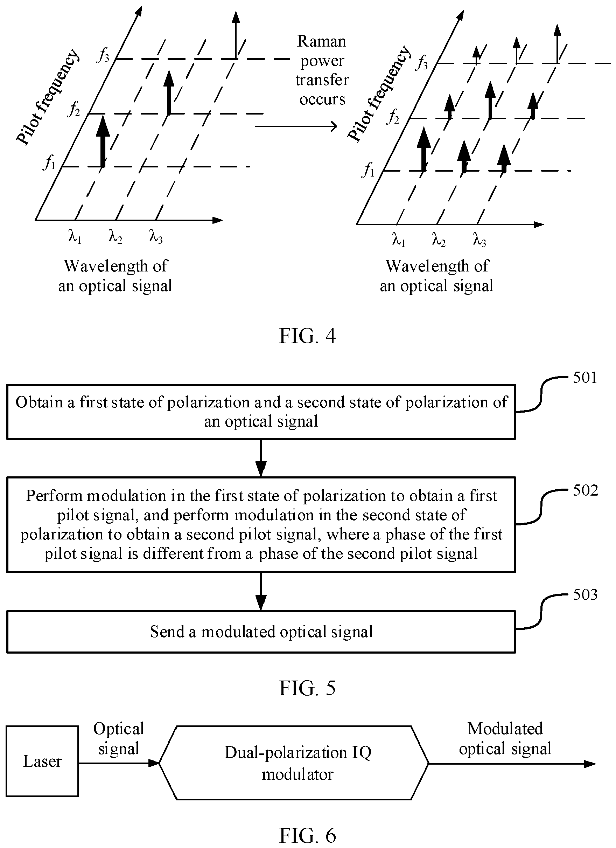

quency $f_3$. When stimulated Raman scattering occurs on the optical fiber, Raman power transfer occurs on the optical signals. Power of the optical signal of the wavelength $\lambda_1$ is partially transferred to the optical signals of the wavelengths $\lambda_2$ and $\lambda_3$. Power of the optical signal of the wavelength $\lambda_2$ is partially transferred to the optical signals of the wavelengths $\lambda_1$ and $\lambda_3$. Power of the optical signal of the wavelength $\lambda_3$ is partially transferred to the optical signals of the wavelengths $\lambda_1$ and $\lambda_2$. Correspondingly, as shown in FIG. 4, power of the pilot signal with the frequency $f_1$ is partially transferred to the optical signals of the wavelengths $\lambda_1$ and $\lambda_2$. Power of the pilot signal with the frequency $f_2$ is partially transferred to the optical signals of the wavelengths $\lambda_1$ and $\lambda_3$. Power of the pilot signal with the frequency $f_3$ is partially transferred to the optical signals of the wavelengths $\lambda_1$ and $\lambda_2$.

To reduce interference of a pilot signal transferred to an optical signal of another wavelength due to Raman power transfer effect, embodiments of this application provide an optical signal sending method. The method may be implemented by using a transmitter in a WDM system. Refer to FIG. 5. The method may include the following steps.

Step 501: Obtain a first state of polarization and a second state of polarization of an optical signal.

The first state of polarization is orthogonal to the second state of polarization.

During implementation, a laser in a transmitter emits an optical signal. Then, a device that is of the transmitter and that may implement a dual-polarization function performs dual-polarization on the optical signal, to obtain the first state of polarization and the second state of polarization of the optical signal.

Different transmitter structures may have different devices that implement the dual-polarization function. The following lists several transmitters for description.

As shown in FIG. 6, a transmitter may include a laser and a dual-polarization IQ modulator. The laser emits an optical signal, and the optical signal enters the dual-polarization IQ modulator. The dual-polarization IQ modulator splits the optical signal into an optical signal having a first polarization state and an optical signal having a second polarization state, wherein the first polarization state and the second polarization state are orthogonal.

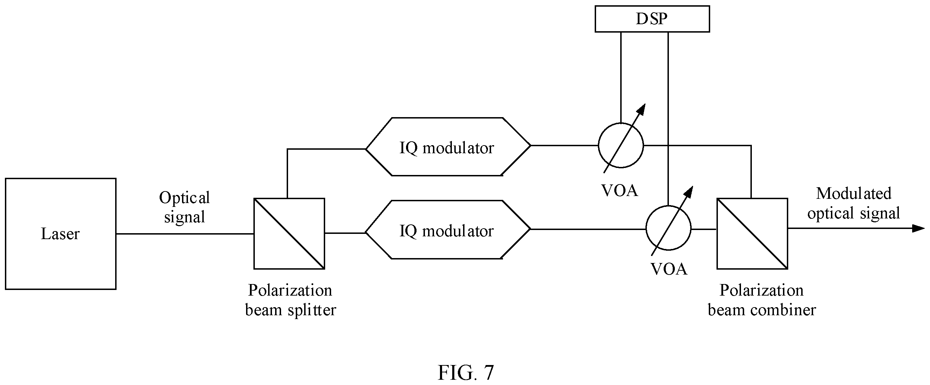

As shown in FIG. 7, a transmitter includes a laser, a polarization beam splitter, IQ modulators, variable optical attenuators (variable optical attenuator, VOA), and a polarization beam combiner. The laser emits an optical signal, and the optical signal enters the polarization beam splitter. The polarization beam splitter splits the optical signal into optical signals in which a first state of polarization of the optical signal and a second state of polarization of the optical signal are orthogonal, and separately outputs the two optical signals to the two IQ modulators.

Step 502: Perform modulation in the first state of polarization to obtain a first pilot signal, and perform modulation in the second state of polarization to obtain a second pilot signal, where

a phase of the first pilot signal is different from a phase of the second pilot signal.

During implementation, the transmitter separately modulates the optical signal in the two orthogonal states of polarization to obtain the first pilot signal and the second pilot signal that are in the same frequency but have different phases.

Different transmitter structures may also have different devices that are configured to obtain the pilot signal through modulation.

In the transmitter shown in FIG. 6, after splitting the input optical signal into the optical signals in which a first state of polarization of the optical signal and a second state of polarization of the optical signal, the dual-polarization IQ modulator performs quadrature amplitude modulation to separately obtain pilot signals through modulation in the first state of polarization and the second state of polarization. The pilot signals obtained through modulation in the first state of polarization and the second state of polarization have different phases. For example, the pilot signal obtained through modulation in the first state of polarization is as follows:

$$ m^*\sin\left(2\pi f_k t + \varPhi_0\right) $$

The pilot signal obtained through modulation in the second state of polarization is as follows:

$$ m^*\sin\left(2\pi f_k t + \varPhi_0 + \alpha\right) $$

m is a modulation depth, $f_k$ is a modulation frequency, t is time, $\varPhi_0$ is an original phase, $\alpha$ is a phase difference, and a value of $\alpha$ may be $(0, 2\pi)$.

The following uses examples to describe values of the modulation frequency and the modulation depth that are of the pilot signal.

The modulation frequency of the pilot signal may be between 30 megahertz (MHz) and 40 MHz, and the modulation depth of the pilot signal may be between 0.01 and 0.2.

The modulation depth is defined as $(P_{max} - P_{min})/\overline{P} \cdot P_{max}$ is maximum power of the optical signal, $P_{min}$ is minimum power of the optical signal, and $\overline{P}$ is an average power of the optical signal.

In addition, it should be further noted that the dual-polarization IQ modulator may further modulate to-be-sent data in the first state of polarization and the second state of polarization. The to-be-sent data may be service data that a user intends to send.

In the transmitter shown in FIG. 7, the IQ modulator modulates to-be-sent data in an input state of polarization, and outputs modulated data to a corresponding VOA. Then, a digital signal processor (digital signal processor, DSP) controls the two VOAs to separately modulate input optical signals to obtain pilot signals. The pilot signals obtained by the two VOAs through modulation have different phases.

In a possible implementation, to enable the pilot signals obtained separately through modulation in the two states of polarization to cancel out each other after the pilot signals are transferred to another optical signal, the pilot signals obtained separately through modulation on the optical signal in the two states of polarization may be signals with reverse phases. In other words, a phase difference between the phases of the two pilot signals is 180° (namely, $\pi$ in a radian measure).

During implementation, the pilot signals obtained separately through modulation in the two states of polarization may have reverse phases in a plurality of forms. The following lists several of the forms for description.

Form 1

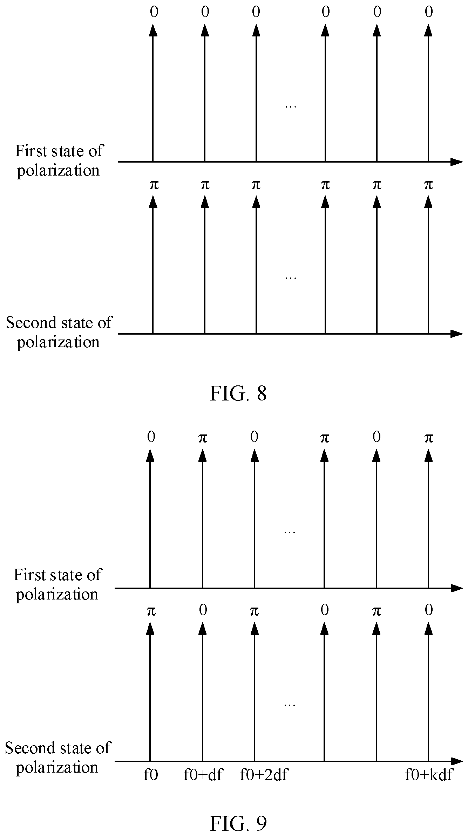

As shown in FIG. 8, pilot signals obtained through modulation in a first state of polarization in subbands are all in-phase, and pilot signals obtained through modulation in a second state of polarization in the subbands are all in-phase. Phases of the pilot signals obtained through modulation in the first state of polarization in the subbands are all reverse to phases of the pilot signals obtained through modulation in the first state of polarization in the subbands.

For example, the phases of the pilot signals obtained through modulation in the first state of polarization in the subbands are all $m^*\sin(2\pi f_k t + \varPhi_0)$, and the phases of the pilot signals obtained through modulation in the second state of polarization in the subbands are all $m^*\sin(2\pi f_k t + \varPhi_0 + \pi)$.

Form 2

A phase of a pilot signal obtained through modulation in the first state of polarization in an $A^{th}$ subband is reverse to a phase of a second pilot signal obtained through modulation in the second state of polarization in the $A^{th}$ subband. A phase of a first pilot signal obtained through modulation in the first state of polarization in a $B^{th}$ subband is reverse to a phase of a second pilot signal obtained through modulation in the second state of polarization in the $B^{th}$ subband. A is an odd number and B is an even number, or A is an even number and B is an odd number.

For example, if the state of polarization has k+1 subbands, and k is an even number, a value of A may range from 1, 3, 5, ..., to k+1, and correspondingly, a value of B may range from 2, 4, 6, ..., to k. Alternatively, a value of A may range from 2, 4, 6,..., to k, and correspondingly, a value of B may range from 1, 3, 5, ..., to k+1. Pilot signals obtained through modulation in the first state of polarization in the first, third, fifth, ..., and $(k+1)^{th}$

subbands are $m^*\sin(2\pi f_k t + \Phi_0)$. Pilot signals obtained through modulation in the first state of polarization in the second, fourth, sixth, ..., and $k^{th}$ subbands are $m^*\sin(2\pi f_k t + \Phi_0 + \pi)$. Pilot signals obtained through modulation in the second state of polarization in the first, third, fifth, ..., and $(k+1)^{th}$ subbands are $m^*\sin(2\pi f_k t + \Phi_0 + \pi)$. Pilot signals obtained through modulation in the second state of polarization in the second, fourth, sixth, ..., and $k^{th}$ subbands are all $m^*\sin(2\pi f_k t + \Phi_0)$. .

As shown in FIG. 9, a state of polarization has k+1 subbands, which are respectively denoted as f0, 10+df, f0+2df, ..., and f0+kdf. Phases of pilot signals obtained through modulation in a first state of polarization in the first, third, fifth, ..., and $(k+1)^{th}$ subbands are reverse to phases of second pilot signals obtained through modulation in a second state of polarization in the second, fourth, sixth, ..., and $k^{th}$ subbands. Phases of pilot signals obtained through modulation in the first state of polarization in the second, fourth, sixth, ..., and $k^{th}$ subbands are reverse to phases of pilot signals obtained through modulation in the second state of polarization in the first, third, fifth, ..., and $(k+1)^{th}$ subbands.

Form 3

Phases of pilot signals obtained through modulation in the first state of polarization in a first subband to an $N^{th}$ subband are reverse to phases of pilot signals obtained through modulation in the second state of polarization in the first subband to the $N^{th}$ subband. Phases of pilot signals obtained through modulation in the first state of polarization in an $(N+1)^{th}$ subband to a last subband are reverse to phases of pilot signals obtained through modulation in the second state of polarization in the $(N+1)^{th}$ subband to the last subband.

For example, the state of polarization has k+1 subbands. The pilot signals obtained through modulation in the first state of polarization in the first subband to the $N^{th}$ subband are all $m^*\sin(2\pi f_k t + \Phi_0)$, and the pilot signals obtained through modulation in the second state of polarization in the first subband to the $N^{th}$ subband are all $m^*\sin(2\pi f_k t + \Phi_0 + \pi)$. The pilot signals obtained through modulation in the first state of polarization in the $(N+1)^{th}$ subband to the $(k+1)^{th}$ subband are all $m^*\sin(2\pi f_k t + \Phi_0 + \pi)$, , and the pilot signals obtained through modulation in the second state of polarization in the $(N+1)^{th}$ subband to the $(k+1)^{th}$ subband are all $m^*\sin(2\pi f_k t + \Phi_0)$.

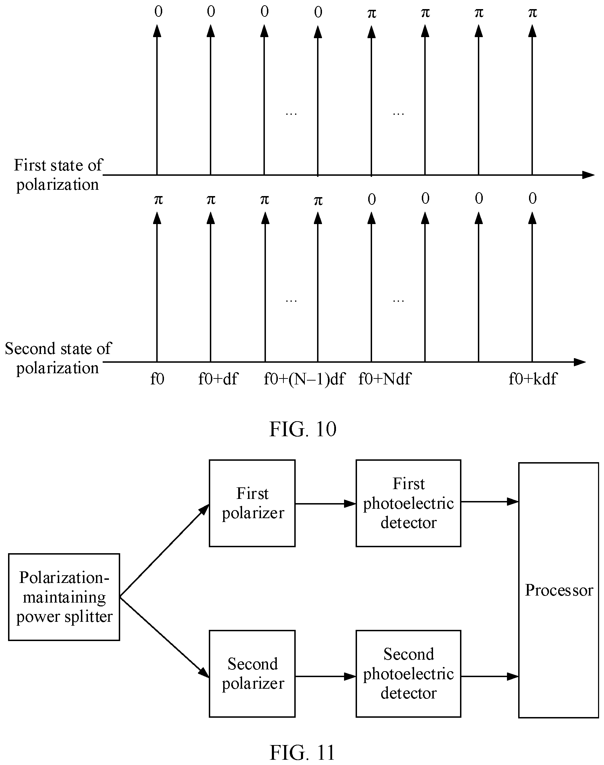

As shown in FIG. 10, a state of polarization has k+1 subbands, which are respectively denoted as f0, f0+df, f0+2df, ..., and f0+kdf. Phases of pilot signals obtained through modulation in the first state of polarization in a first subband to an $N^{th}$ subband are reverse to phases of pilot signals obtained through modulation in the second state of polarization in the first subband to the $N^{th}$ subband. Phases of pilot signals obtained through modulation in the first state of polarization in an $(N+1)^{th}$ subband to a $(k+1)^{th}$ subband are reverse to phases of pilot signals obtained through modulation in the second state of polarization in the $(N+1)^{th}$ subband to the $(k+1)^{th}$ subband.

Step 503: Send a modulated optical signal.

During implementation, after modulating the to-be-sent data and obtaining the pilot signal through modulation, the transmitter outputs the modulated optical signal to the wavelength division multiplexer.

To collaborate with the optical signal sending method provided in embodiments of this application, to enable pilot signals with reverse phases to be detected, embodiments of this application further correspondingly provide several pilot receivers.

Refer to FIG. 11. A pilot receiver includes a polarization-maintaining power splitter, a first polarizer, a second polarizer, a first photoelectric detector, a second photoelectric detector, and a processor.

The following first briefly describes a relationship between a polarization direction of a polarizer and a polarization direction of an optical signal.

When a polarization direction of a state of polarization is parallel to the polarization direction of the polarizer, the state of polarization may completely pass through the polarizer. When the polarization direction of the state of polarization is orthogonal (vertical) to the polarization direction of the polarizer, the state of polarization cannot pass through the polarizer. As an included angle between the polarization direction of the state of polarization and the polarization direction of the polarizer changes from 0° to 90°, signal strength of a state of polarization passing through the polarizer becomes increasingly weaker. When the included angle between the polarization direction of the state of polarization and the polarization direction of the polarizer is 45°, only half of the state of polarization may pass through the polarizer.

During implementation, in a transmission procedure, polarization rotation may occur in a first state of polarization and a second state of polarization of the optical signal, and the following case occurs: the included angle (an acute angle) between the polarization direction of the state of polarization and the polarization direction of the polarizer is 45°. In this case, if two conventional polarizers with polarization directions orthogonal to each other are used to perform polarization filtering, each polarizer outputs half of the first state of polarization and half of the second state of polarization to a corresponding photoelectric detector. Correspondingly, the photoelectric detector corresponding to each polarizer receives half of a first pilot signal and half of a second pilot signal. When phases of the pilot signals obtained through modulation in the two states of polarization are reverse, the two pilot signals received by the photoelectric detector cancel out each other, and power of a pilot signal finally obtained is 0.

To avoid the foregoing problem, to enable the photoelectric detector to detect a pilot signal, in this embodiment of this application, the polarization direction of the first polarizer is not orthogonal to the polarization direction of the second polarizer.

In this embodiment of this application, refer to FIG. 11. Two polarizers are disposed, so that a polarization-maintaining power splitter needs to split an input optical signal into two paths of optical signals. In this case, the polarization-maintaining power splitter is a 1:1 polarization-maintaining power splitter.

The polarization-maintaining power splitter receives the input optical signal, performs polarization-maintaining power splitting on the input optical signal, outputs a first optical signal to a first polarizer, and outputs a second optical signal to a second polarizer. The first optical signal and the second optical signal obtained after polarization-maintaining power splitting are the same, states of polarization of the two optical signals are the same as states of polarization of the input optical signal, and power of both of the two optical signals is half of power of the input optical signal.

The first polarizer performs filtering on the states of polarization of the first optical signal, and outputs, to the first photoelectric detector, a third optical signal obtained through filtering on the states of polarization. The second polarizer performs filtering on the states of polarization of the second optical signal, and outputs, to the second photoelectric detector, a fourth optical signal obtained through filtering on the states of polarization.

The first photoelectric detector converts the third optical signal into a first electrical signal, and outputs the first electrical signal to the processor. The second photoelectric detector converts the fourth optical signal into a second electrical signal, and outputs the second electrical signal to the processor.

The processor processes the first electrical signal and the second electrical signal to obtain power of a pilot signal of an optical signal of each wavelength in the input optical signal.

Specifically, the processor may perform the following processing.

It is assumed that the first electrical signal is $s_1(t)$, and the second electrical signal is $s_2(t)$.

First, the processor performs Fourier transform on $s_1(t)$ to obtain first sub-power corresponding to each pilot frequency $f_k$, where

$$P_{s_1, f_k} = fft(s_1(t), \ f_k),$$

and performs Fourier transform on $s_2(t)$ to obtain second sub-power corresponding to each pilot frequency $f_k$, where

$$P_{s_2, f_k} = fft(s_2(t), \ f_k).$$

For each pilot frequency $f_k$, the first sub-power and the second sub-power are squared and then summed up, and the square root of the sum is extracted to obtain actual power corresponding to the pilot frequency $f_k$, where

$$P_k = \sqrt{P^2_{s_1, \ f_k} + P^2_{s_2, \ f_k}}.$$

Herein, the actual power corresponding to the pilot frequency $f_k$ is power of a pilot signal that is in the pilot frequency $f_k$ and that is obtained through modulation on an optical signal of a wavelength $\lambda_k$ in the input optical signal.

In a possible implementation, to enable the electrical signals output by the first photoelectric detector and the second photoelectric detector to be orthogonal to each other, the included angle between the polarization direction of the first polarizer and the polarization direction of the second polarizer may be 45°.

When the included angle between the polarization direction of the first polarizer and the polarization direction of the second polarizer may be 45°, it is assumed that an amplitude of the electrical signal output by the first photoelectric detector is $\cos^2(\theta) - \sin^2(\theta) = \cos(2\theta)$. In this case, an amplitude of the electrical signal output by the second photoelectric detector is $\cos^2(\theta + 45°) - \sin^2(\theta + 45°) = \cos(2\theta + 90°) = \sin(2\theta)$. $\theta$ is an included angle between a polarization direction obtained by combining the two orthogonal states of polarization input to the polarizers and the polarization direction of the first polarizer.

In a possible implementation, a polarization angle of the first polarizer is 0°, and a polarization angle of the second polarizer is 45°.

The polarizer with the 0° polarization angle is also referred to as a 0° polarizer, and the polarizer with the 45° polarization angle is also referred to as a 45° polarizer.

When the first polarizer is the 0° polarizer, $\theta$ in $\cos(2\theta)$ and $\sin(2\theta)$ is a polarization angle obtained after the two orthogonal states of polarization input to the polarizers are combined.

In a possible implementation, both the first polarizer and the second polarizer are fiber-optic polarizers.

In a possible implementation, the polarization-maintaining power splitter is a polarization-maintaining optical fiber coupler.

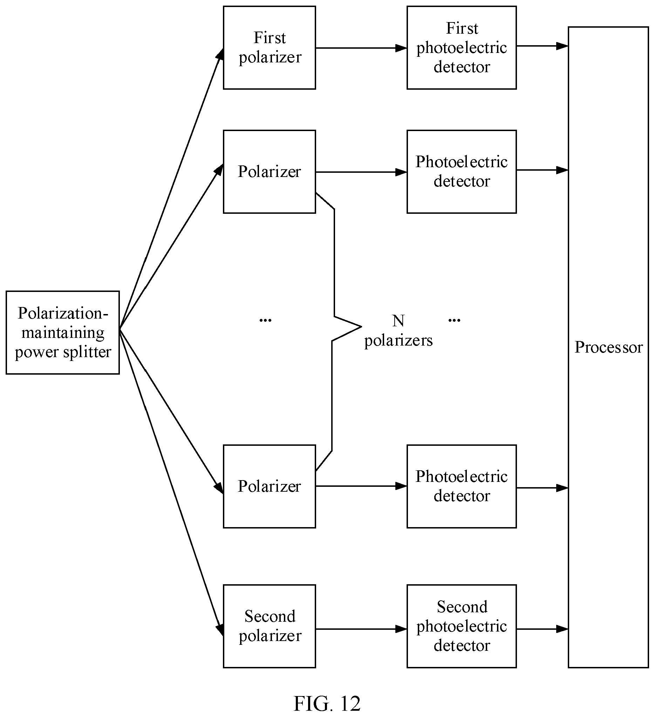

In a possible implementation, refer to FIG. 12. In addition to the first polarizer and the second polarizer, a pilot receiver provided in this embodiment of this application may further include N polarizers, and may correspondingly further include N photoelectric detectors corresponding to the N polarizers. The N polarizers are in a one-to-one correspondence with the N photoelectric detectors.

The N polarizers have different polarization angles. Each of the polarization angles of the N polarizers is greater than the polarization angle of the first polarizer and less than the polarization angle of the second polarizer.

In a possible implementation, the polarization angles of the N polarizers may respectively be

$$\frac{1}{N+1}\varphi, \quad \frac{2}{N+1}\varphi, \ ..., \text{ and } \ \frac{N}{N+1}\varphi$$

. $\varphi$ is the included angle between the polarization direction of the first polarizer and the polarization direction of the second polarizer.

When the pilot receiver further includes the N polarizers, the polarization-maintaining power splitter needs to perform polarization-maintaining power splitting on the input optical signal, and output N+2 paths of optical signals. Power of each of the N+2 paths of optical signals is $\frac{1}{N+2}$ of the power of the input optical signal. States of polarization of the N+2 paths of optical signals are the same as the states of polarization of the input optical signal.

For example, if N=1, in addition to the first polarizer and the second polarizer, the pilot receiver further includes a third polarizer, and correspondingly further includes a third photoelectric detector corresponding to the third polarizer. A polarization angle of the third polarizer is 22.5°.

In the pilot receiver shown in FIG. 12, the processor may receive electrical signals output by N+2 photoelectric detectors. For each electrical signal, the processor performs Fourier transform on the electrical signal to obtain sub-power corresponding to each pilot frequency. Then, for each pilot frequency, sub-power corresponding to the pilot frequency is squared and then summed up, and the square root of the sum is extracted to obtain actual power corresponding to the pilot frequency.

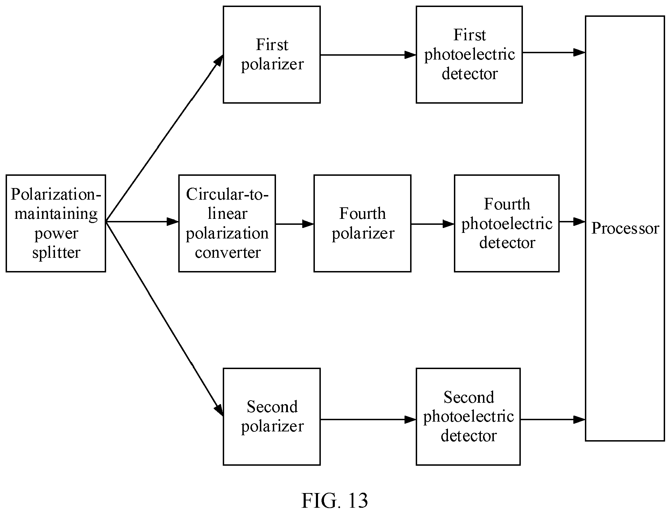

In a possible implementation, refer to FIG. 13. To ensure that a pilot receiver may still receive a pilot signal obtained through modulation in a state of polarization when the state of polarization is rotated to a special state of polarization in a transmission procedure, the pilot receiver provided in this embodiment of this application may further include a receiver, and further include a circular-to-linear polarization converter, a fourth polarizer, and a fourth photoelectric detector.

The following first briefly describes the special state of polarization.

When a case in which a state of polarization changes from a state of linear polarization to a state of circular polarization is taken into consideration, it is assumed that an amplitude of an electrical signal output by a first photoelectric detector is $\cos^2(\theta) - \sin^2(\theta)$, an amplitude of an electrical signal output by a second photoelectric detector is $[\cos^2(\theta + \varphi) - \sin^2(\theta + \varphi)]\cos\delta$, and an amplitude of an electrical signal output by a fourth photoelectric detector is $[\sin^2(\theta + \phi) - \cos^2(\theta + \phi)]\sin\delta$. $\phi$ is an included angle between a polarization angle of the fourth polarizer and a polarization angle of the first po-

larizer. $\delta$ is ovality obtained after the two orthogonal states of polarization input to the polarizers are combined. When $\theta = 45°$ and $\delta = 90°$, both the amplitude $\cos^2(\theta) - \sin^2(\theta)$ of the electrical signal output by the first photoelectric detector and the amplitude $[\cos^2(\theta + \varphi) - \sin^2(\theta + \varphi)]\cos\delta$ of the electrical signal output by the second photoelectric detector are 0, and only the amplitude $[\sin^2(\theta + \phi) - \cos^2(\theta + \phi)]\sin\delta$ of the electrical signal output by the fourth photoelectric detector is not 0. This is the special state of polarization. It can be seen that in this case, neither the first photoelectric detector nor the second detector outputs an electrical signal.

When the pilot receiver further includes the circular-to-linear polarization converter, the fourth polarizer, and the fourth photoelectric detector, the polarization-maintaining power splitter needs to perform polarization-maintaining power splitting on the input optical signal, and output three paths of optical signals. The three paths of optical signals are respectively output to the first polarizer, the second polarizer, and the circular-to-linear polarization converter. Power of each of the three paths of optical signals is one third of the power of the input optical signal, and states of polarization of the three paths of optical signals are the same as the states of polarization of the input optical signal.

The polarization-maintaining power splitter converts the state of polarization of the received optical signal. If an input state of polarization is a state of linear polarization, the state of linear polarization is converted into a state of circular polarization for output. If an input state of polarization is a state of circular polarization, the state of circular polarization is converted into a state of linear polarization.

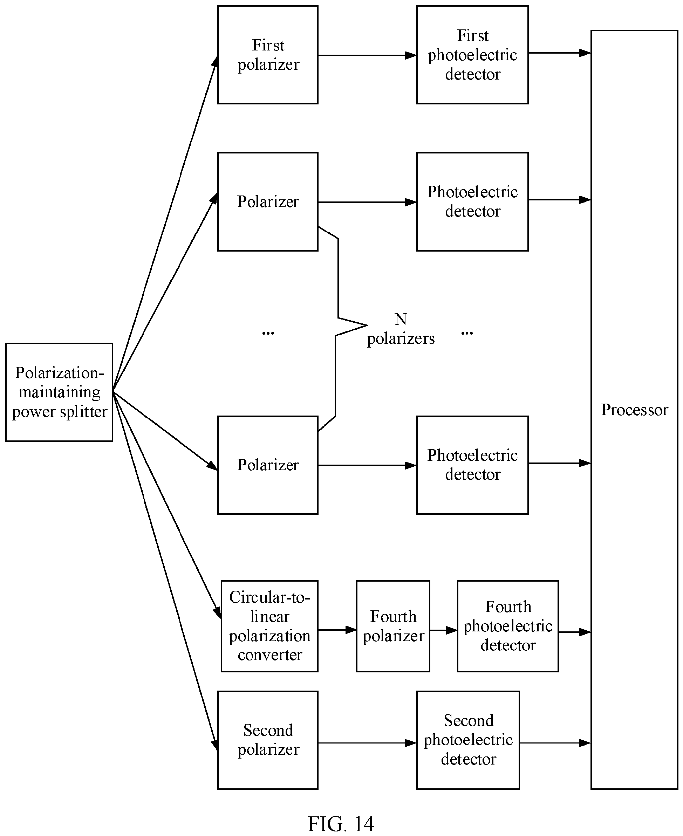

In addition, the circular-to-linear polarization converter, the fourth polarizer, and the fourth photoelectric detector may also be disposed on the pilot receiver shown in FIG. 12, as shown in FIG. 14.

In a possible implementation, a polarization angle of the fourth polarizer is the same as the polarization angle of the first polarizer or the polarization angle of the second polarizer.

In a possible implementation, the circular-to-linear polarization converter is a quarter-wave plate.

In a possible implementation, in a receiver structure shown in FIG. 11, rotation of state of polarization and a polarization dependent loss may be further monitored. The following separately describes monitoring rotation of state of polarization (rotation of state of polarization, RSOP) and monitoring a polarization dependent loss (polarization dependent loss, PDL).

1. Monitoring rotation of state of polarization

The first photoelectric detector outputs the first electrical signal to the processor. The second photoelectric detector outputs the second electrical signal to the processor. The processor calculates a ratio of the first electrical signal to the second electrical signal. If the ratio of the first electrical signal to the second electrical signal changes with time, it is determined that the state of polarization rotates with time, in other words, a polarization angle of the state of polarization changes with time.

Specifically, a derivative of the ratio of the first electrical signal to the second electrical signal with respect to time may be calculated and used as information about the rotation of state of polarization, to represent a time-domain change of the polarization angle of the state of polarization.

2. Monitoring a polarization dependent loss

The first photoelectric detector outputs the first electrical signal to the processor. The second photoelectric detector outputs the second electrical signal to the processor. It is assumed that the amplitude of the first electrical signal is $\cos^2(\theta) - \sin^2(\theta)$, and the amplitude of the second electrical signal is $\cos^2(\theta + \varphi) - \sin^2(\theta + \varphi)$. $\theta$ is an included angle between a polarization direction obtained by combining the two orthogonal states of polarization and the polarization direction of the first polarizer. When the first polarizer is the 0° polarizer, $\theta$ is a polarization angle obtained after the two orthogonal states of polarization are combined. $\varphi$ is the included angle between the polarization direction of the first polarizer and the polarization direction of the second polarizer. When the second polarizer is the 45° polarizer, $\varphi = 45°$.

The processor compares power of the first electrical signal with power of the second electrical signal based on a monitoring cycle, to determine the polarization dependent loss.

Specifically, in each monitoring cycle, the processor obtains the maximum power of the first electrical signal in the monitoring cycle and first power of the second electrical signal when the first electrical signal is at the maximum power in the monitoring cycle. A condition for determining that no polarization dependent loss exists in the input optical signal is: if the first power is $[\cos^2(\varphi) - \sin^2(\varphi)]*P_{max1}$ when the first electrical signal is at the maximum power $P_{max1}$ in the monitoring cycle, it may be determined that no polarization dependent loss exists in the two states of polarization.

In each monitoring cycle, the processor further obtains the maximum power of the second electrical signal in the monitoring cycle, and second power of the first electrical signal when the second electrical signal is at the maximum power in the monitoring cycle. A condition for determining that no polarization dependent loss exists in the input optical signal is: if the second power is $[\cos^2(-\varphi) - \sin^2(-\varphi)]*P_{max2}$ when the second electrical signal is at the maximum power $P_{max2}$ in the monitoring cycle, it may be determined that no polarization dependent loss exists in the two states of polarization.

When either of the two conditions for determining that no polarization dependent loss exists in the input optical signal is met, it is determined that no polarization dependent loss exists in the input optical signal. When neither of the two conditions for determining that no polarization dependent loss exists in the input optical signal is met, it is true that the polarization dependent loss exists in the input optical signal.

In a possible implementation, in a receiver structure shown in FIG. 12, rotation of state of polarization and a polarization dependent loss may also be monitored. The following separately describes monitoring rotation of state of polarization and monitoring a polarization dependent loss by using the receiver structure shown in FIG. 12 with N=1.

1. Monitoring rotation of state of polarization

The first photoelectric detector outputs the first electrical signal to the processor. The second photoelectric detector outputs the second electrical signal to the processor. The third photoelectric detector outputs the third electrical signal. Whether the state of polarization rotates with time is determined based on any two of the first electrical signal, the second electrical signal, and the third electrical signal.

Specifically, the processor calculates a ratio of any two of the first electrical signal, the second electrical signal, and the third electrical signal. If the ratio changes with time, it is determined that the state of polarization rotates with time.

Specifically, a derivative of the ratio of any two of the electrical signals with respect to time may be calculated and used as information about the rotation of state of polarization, to represent a time-domain change of the polarization angle of the state of polarization.

For example, the processor calculates a ratio of the first electrical signal to the second electrical signal. If the ratio of the first electrical signal to the second electrical signal changes with time, it is determined that the state of polarization rotates with time.

2. Monitoring a polarization dependent loss

The first photoelectric detector outputs the first electrical signal to the processor. The second photoelectric detector outputs the second electrical signal to the processor. The third photoelectric detector outputs the third electrical signal to the processor. It is assumed that the amplitude of the first electrical signal is $\cos^2(\theta) - \sin^2(\theta)$, the amplitude of the second electrical signal is $\cos^2(\theta + \varphi) - \sin^2(\theta + \varphi)$, and the amplitude of the third electrical signal is $\cos^2(\theta + \sigma) - \sin^2(\theta + \sigma)$. $\sigma$ is an included angle between a polarization direction of the third polarizer and the polarization direction of the first polarizer, and a range of $\sigma$ is (0°, 45°). If the third polarizer is a 22.5° polarizer, $\sigma = 22.5°$.

The processor compares power of the first electrical signal, power of the second electrical signal, and power of the third electrical signal based on a monitoring cycle, to determine the polarization dependent loss.

Specifically, in each monitoring cycle, the processor obtains the maximum power of the first electrical signal in the monitoring cycle, first power of the second electrical signal when the first electrical signal is at the maximum power in the monitoring cycle, and third power of the third electrical signal when the first electrical signal is at the maximum power in the monitoring cycle. A condition for determining that no polarization dependent loss exists in the input optical signal is: if the first power is $[\cos^2(\varphi) - \sin^2(\varphi)]^*P_{max1}$ and the third power is $[\cos^2(\sigma) - \sin^2(\sigma)]^*P_{max1}$ when the first electrical signal is at the maximum power $P_{max1}$ in the monitoring cycle, it may be determined that no polarization dependent loss exists in the input optical signal.

In each monitoring cycle, the processor further obtains the maximum power of the second electrical signal in the monitoring cycle, and second power of the first electrical signal when the second electrical signal is at the maximum power in the monitoring cycle, and fourth power of the third electrical signal when the second electrical signal is at the maximum power in the monitoring cycle. A condition for determining that no polarization dependent loss exists in the input optical signal is: if the second power is $[\cos^2(-\varphi) - \sin^2(-\varphi)]^*P_{max2}$ and the fourth power is $[\cos^2(-\varphi + \sigma) - \sin^2(-\varphi + \sigma)]^* P_{max2}$ when the second electrical signal is at the maximum power $P_{max2}$ in the monitoring cycle, it may be determined that no polarization dependent loss exists in the input optical signal.

In each monitoring cycle, the processor further obtains the maximum power of the third electrical signal in the monitoring cycle, fifth power of the first electrical signal when the third electrical signal is at the maximum power in the monitoring cycle, and sixth power of the second electrical signal when the third electrical signal is at the maximum power in the monitoring cycle. A condition for determining that no polarization dependent loss exists in the input optical signal is: if the fifth power is $[\cos^2(-\sigma) - \sin^2(-\sigma)]^*P_{max3}$ and the sixth power is $[\cos^2(-\sigma + \varphi) - \sin^2(-\sigma + \varphi)]^*P_{max3}$ when the second electrical signal is at the maximum power $P_{max3}$ in the monitoring cycle, it may be determined that no polarization dependent loss exists in the input optical signal.

When any one of the three conditions for determining that no polarization dependent loss exists in the input optical signal is met, it is determined that no polarization dependent loss exists in the input optical signal. When none of the three conditions for determining that no polarization dependent loss exists in the input optical signal is met, it is true that the polarization dependent loss exists in the input optical signal.

In a possible implementation, in pilot receiver structures shown in FIG. 13 and FIG. 14, rotation of state of polarization and a polarization dependent loss may also be monitored. Processing for monitoring rotation of state of polarization and monitoring a polarization dependent loss by using the pilot receiver structure shown in FIG. 13 is similar to processing for monitoring rotation of state of polarization and monitoring a polarization dependent loss by using the pilot receiver structure shown in FIG. 14. The following describes only monitoring of rotation of state of polarization and monitoring of a polarization dependent loss by using the pilot receiver structure shown in FIG. 13.

Rotation of state of polarization is monitored in a manner same as or similar to that for monitoring rotation of state of polarization by using the receiver structure shown in FIG. 11. Details are not described herein again. The following describes monitoring of the polarization dependent loss.

The first photoelectric detector outputs the first electrical signal to the processor. The second photoelectric detector outputs the second electrical signal to the processor. The fourth photoelectric detector outputs the fourth electrical signal to the processor. When a special state of polarization is taken into consideration, it is assumed that the amplitude of the first electrical signal is $\cos^2(\theta) - \sin^2(\theta)$, the amplitude of the second electrical signal is $[\cos^2(\theta + \varphi) - \sin^2(\theta + \varphi)]\cos\delta$, and the amplitude of the fourth electrical signal is $[\sin^2(\theta + \phi) - \cos^2(\theta + \phi)]\sin\delta$.

The processor compares power of the first electrical signal, power of the second electrical signal, and power of the fourth electrical signal based on a monitoring cycle, to determine the polarization dependent loss.

Specifically, in each monitoring cycle, the processor obtains the maximum power of the first electrical signal in the monitoring cycle, first power of the second electrical signal when the first electrical signal is at the maximum power in the monitoring cycle, and seventh power of the fourth electrical signal when the first electrical signal is at the maximum power in the monitoring cycle. A condition for determining that no polarization dependent loss exists in the input optical signal is: if the first power is $[\cos^2(\varphi) - \sin^2(\varphi)]\cos\delta^*P_{max1}$ and the seventh power is $[\sin^2(\varphi) - \cos^2(\phi)]\sin\delta^*P_{max1}$ when the first electrical signal is at the maximum power $P_{max1}$ in the monitoring cycle, it may be determined that no polarization dependent loss exists in the input optical signal.

In each monitoring cycle, the processor further obtains the maximum power of the second electrical signal in the monitoring cycle, second power of the first electrical signal when the second electrical signal is at the maximum power in the monitoring cycle, and eighth power of the fourth electrical signal when the second electrical signal is at the maximum power in the monitoring cycle. A condition for determining that no polarization dependent loss exists in the input optical signal is: if the second power is $[\cos^2(-\varphi) - \sin^2(-\varphi)]^*P_{max2}$ and the eighth power is 0 when the second electrical signal is at the maximum power $P_{max2}$ in the monitoring cycle, it may be determined that no polarization dependent loss exists in the input optical signal.

In each monitoring cycle, the processor further obtains the maximum power of the fourth electrical signal in the monitoring cycle, ninth power of the first electrical signal when the fourth electrical signal is at the maximum power in the monitoring cycle, and tenth power of the second electrical signal when the fourth electrical signal is at the maximum power in the monitoring cycle. A condition for determining that no polarization dependent loss exists in the input optical signal is: if the ninth power is $[\cos^2(-\phi) - \sin^2(-\phi)]*P_{max4}$ and the tenth power is 0 when the fourth electrical signal is at the maximum power $P_{max4}$ in the monitoring cycle, it may be determined that no polarization dependent loss exists in the input optical signal.

When any one of the three conditions for determining that no polarization dependent loss exists in the input optical signal is met, it is determined that no polarization dependent loss exists in the input optical signal. When none of the three conditions for determining that no polarization dependent loss exists in the input optical signal is met, it is true that the polarization dependent loss exists in the input optical signal.

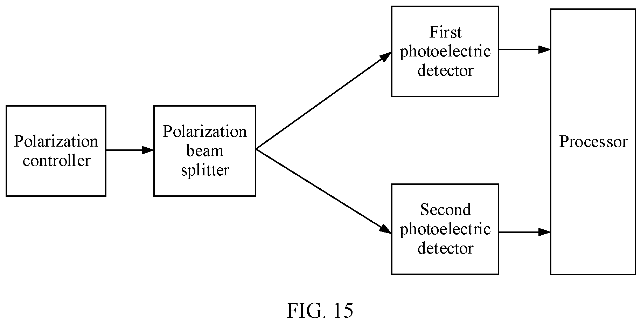

Embodiments of this application further provide a pilot receiver. Refer to FIG. 15. The pilot receiver includes a polarization controller, a polarization beam splitter, a first photoelectric detector, a second photoelectric detector, and a processor.

During implementation, the polarization controller receives an input optical signal, performs polarization scrambling on the input optical signal or performs polarization locking on input optical signal, and outputs an optical signal obtained after polarization scrambling or an optical signal obtained after polarization locking to the polarization beam splitter.

Polarization scrambling means randomly scrambling an input optical signal to change a polarization direction of a state of polarization of the input optical signal.

Polarization locking means locking a polarization direction of a state of polarization of an input optical signal to output a state of polarization with a locked polarization direction.

Both polarization scrambling and polarization locking are performed to avoid a 45° polarization direction of the state of polarization of the optical signal input into the polarization beam splitter. Therefore, when the polarization controller is used for polarization locking, it is also necessary to ensure that a polarization angle of the state of polarization output by the polarization controller is not 45°.

The polarization beam splitter polarizes and splits the optical signal obtained after polarization scrambling or polarization locking to obtain a first optical signal and a second optical signal that are orthogonal, outputs the first optical signal to the first photoelectric detector, and outputs the second optical signal to the second photoelectric detector.

The first photoelectric detector converts the first optical signal into a first electrical signal, and outputs the first electrical signal to the processor. The second photoelectric detector converts the second optical signal into a second electrical signal, and outputs the second electrical signal to the processor.

The processor processes the first electrical signal and the second electrical signal to obtain power of a pilot signal of an optical signal of each wavelength in the input optical signal. It should be noted that specific processing performed by the processor herein is the same as the specific processing performed by the processor in the pilot receiver shown in FIG. 11. Details are not described herein again.

In a possible implementation, in a receiver structure shown in FIG. 15, a polarization dependent loss may be monitored.

The processor compares power of the first electrical signal with power of the second electrical signal based on a monitoring cycle, to determine the polarization dependent loss.

Specifically, in each monitoring cycle, the processor obtains the maximum power of the first electrical signal in the monitoring cycle and power of the second electrical signal when the first electrical signal is at the maximum power in the monitoring cycle. A condition for determining that no polarization dependent loss exists in the input optical signal is: if the second electrical signal is also at the maximum power in the monitoring cycle, and two maximum power values are the same when the first electrical signal is at the maximum power in the monitoring cycle, it is determined that no polarization dependent loss exists in the input optical signal.

In each monitoring cycle, the processor obtains the maximum power of the second electrical signal in the monitoring cycle, and power of the first electrical signal when the second electrical signal is at the maximum power in the monitoring cycle. A condition for determining that no polarization dependent loss exists in the input optical signal is: if the first electrical signal is also at the maximum power in the monitoring cycle, and two maximum power values are the same when the second electrical signal is at the maximum power in the monitoring cycle, it is determined that no polarization dependent loss exists in the input optical signal.

When either of the two conditions for determining that no polarization dependent loss exists in the input optical signal is met, it is determined that no polarization dependent loss exists in the input optical signal. When neither of the two conditions for determining that no polarization dependent loss exists in the input optical signal is met, it is determined that the polarization dependent loss exists in the input optical signal.

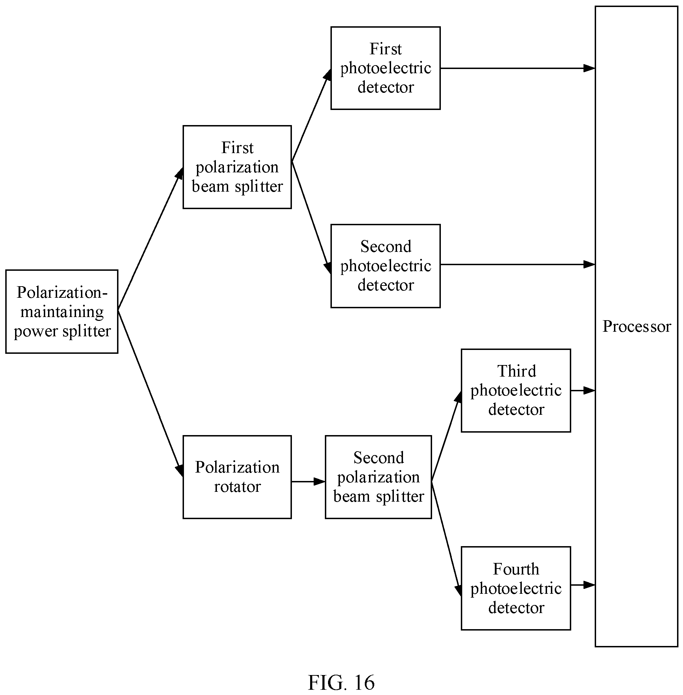

Embodiments of this application further provide a pilot receiver. Refer to FIG. 16. The pilot receiver includes a polarization-maintaining power splitter, a polarization rotator, a first polarization beam splitter, a second polarization beam splitter, a first photoelectric detector, a second photoelectric detector, a third photoelectric detector, a fourth photoelectric detector, and a processor.

During implementation, in a procedure of transmitting an optical signal through an optical fiber, the following case may occur: polarization rotation may occur on the optical signal, and a polarization angle of a first state of polarization or a second state of polarization after polarization rotation is 45°. In this case, if the polarization beam splitter polarizes and splits the optical signal, each optical signal output by the polarization beam splitter includes half of the first state of polarization and half of the second state of polarization. In this way, after each optical signal is input to the photoelectric detector, pilot signals that are obtained through modulation in the two states of polarization and that have reverse phases will cancel out each other. Consequently, the processor cannot calculate power of the pilot signals.

To solve the problem caused by the foregoing case, in the pilot receiver provided in this embodiment of this application, an input optical signal of the pilot receiver first enters the polarization-maintaining power splitter. The polarization-maintaining power splitter performs polarization-maintaining power splitting on the input optical signal, and outputs a first optical signal to the polarization rotator, and outputs a second optical signal to the first polarization beam splitter. The first optical signal and the second optical signal obtained after polarization-maintaining power splitting are the same, states of polarization of the two optical signals are the same as states of polarization of the input optical signal, and power of both of the two optical signals is half of power of the input optical signal.

The polarization rotator rotates polarization of the first optical signal to obtain a third optical signal, and sends the third optical signal to the second polarization beam splitter. The first polarization beam splitter polarizes and splits the second optical signal to obtain a fourth optical signal and a fifth optical signal, outputs the fourth optical signal to the first photoelectric detector, and outputs the fifth optical signal to the second photoelectric detector.

In this way, even if the polarization angle of the first state of polarization or the second state of polarization is 45°, the polarization rotator rotates polarization of the received optical signal, so that the output optical signal no longer has a state of polarization state with the 45° polarization angle. In this way, the processor may effectively calculate the power of the pilot signal finally.

The second polarization beam splitter polarizes and splits the third optical signal to obtain a sixth optical signal and a seventh optical signal, outputs the sixth optical signal to the third photoelectric detector, and outputs the seventh optical signal to the fourth photoelectric detector.

The first photoelectric detector converts the fourth optical signal into a first electrical signal, and outputs the first electrical signal to the processor. The second photoelectric detector is configured to convert the fifth optical signal into a second electrical signal, and output the second electrical signal to the processor. The third photoelectric detector converts the sixth optical signal into a third electrical signal, and outputs the third electrical signal to the processor. The fourth photoelectric detector converts the seventh optical signal into a fourth electrical signal, and outputs the second electrical signal to the processor.

The processor processes the first electrical signal, the second electrical signal, the third electrical signal, and the fourth electrical signal to obtain the power of a pilot signal of the optical signal of each wavelength in the input optical signal.

During implementation, the processor sums up the first electrical signal and the second electrical signal to obtain a fifth electrical signal, and sums up the third electrical signal and the fourth electrical signal to obtain a sixth electrical signal. Then, the processor performs Fourier transform on the fifth electrical signal to obtain first sub-power corresponding to each pilot frequency, and performs Fourier transform on the sixth electrical signal to obtain second sub-power corresponding to each pilot frequency. Finally, for each pilot frequency, the first sub-power and the second sub-power corresponding to the pilot frequency are squared and then summed up, and the square root of the sum is extracted to obtain the actual power corresponding to the pilot frequency.

In a possible implementation, the polarization rotator is a 45° polarization rotator. In other words, the polarization rotator may rotate the state of polarization of the optical signal by 45°, and then output the optical signal.

In addition, the polarization rotator may alternatively be a polarization rotator of another angle, for example, an angle with a degree between 40° and 50°.

In a possible implementation, in a receiver structure shown in FIG. 16, rotation of state of polarization and a polarization dependent loss may be monitored. The following separately describes monitoring rotation of state of polarization and monitoring a polarization dependent loss.

1. Monitoring rotation of state of polarization

The first electrical signal and the second electrical signal are monitored as a group. The third electrical signal and the fourth electrical signal are monitored as a group. A method for monitoring each group is the same as that for monitoring rotation of state of polarization by using the pilot receiver shown in FIG. 11. Details are not described herein again.

2. Monitoring a polarization dependent loss

The processor compares power of the first electrical signal, power of the second electrical signal, power of the third electrical signal, and power of the fourth electrical signal based on a monitoring cycle, to determine the polarization dependent loss.

Specifically, in each monitoring cycle, the processor obtains the maximum power of the first electrical signal in the monitoring cycle, first power of the second electrical signal when the first electrical signal is at the maximum power in the monitoring cycle, second power of the third electrical signal when the first electrical signal is at the maximum power in the monitoring cycle, and third power of the fourth electrical signal when the first electrical signal is at the maximum power in the monitoring cycle. A condition for determining that no polarization dependent loss exists in the input optical signal is: if the second electrical signal is also at the maximum power in the monitoring cycle, two maximum power values are the same, and the second power and the third power are 0 when the first electrical signal is at the maximum power in the monitoring cycle, it is determined that no polarization dependent loss exists in the input optical signal.

In each monitoring cycle, the processor further obtains the maximum power of the second electrical signal in the monitoring cycle, and fourth power of the first electrical signal when the second electrical signal is at the maximum power in the monitoring cycle, fifth power of the third electrical signal when the second electrical signal is at the maximum power in the monitoring cycle, and sixth power of the fourth electrical signal when the second electrical signal is at the maximum power in the monitoring cycle. A condition for determining that no polarization dependent loss exists in the input optical signal is: if the first electrical signal is also at the maximum power in the monitoring cycle, two maximum power values are the same, and the fifth power and the sixth power are 0 when the second electrical signal is at the maximum power in the monitoring cycle, it is determined that no polarization dependent loss exists in the input optical signal.

In each monitoring cycle, the processor further obtains the maximum power of the third electrical signal in the monitoring cycle, seventh power of the second electrical signal when the third electrical signal is at the maximum power in the monitoring cycle, eighth power of the second electrical signal when the third electrical signal is at the maximum power in the monitoring cycle, and ninth power of the fourth electrical signal when the third electrical signal is at the maximum power in the monitoring cycle. A condition for determining that no polarization dependent loss exists in the input optical signal is: if the fourth electrical signal is also at the maximum power in the monitoring cycle, two maximum power values are the same, and the eighth power and the ninth power are 0 when the third electrical signal is at the maximum power in the monitoring cycle, it is determined that no polarization dependent loss exists in the input optical signal.

In each monitoring cycle, the processor further obtains the maximum power of the fourth electrical signal in the monitoring cycle, tenth power of the first electrical signal when the fourth electrical signal is at the maximum power in the monitoring cycle, eleventh power of the third electrical signal when the second electrical signal is at the maximum power in the monitoring cycle, and twelfth power of the fourth electrical signal when the second electrical signal is at the maximum power in the monitoring cycle. A condition for determining that no polarization dependent loss exists in the input optical signal is: if the third electrical signal is also at the maximum power in the monitoring cycle, two maximum power values are the same, and the eleventh power and the twelfth power are 0 when the fourth electrical signal is at the maximum power in the monitoring cycle, it is determined that no polarization dependent loss exists in the input optical signal.

When any one of the four conditions for determining that no polarization dependent loss exists in the input optical signal is met, it is determined that no polarization dependent loss exists in the input optical signal. When none of the four conditions for determining that no polarization dependent loss exists in the input optical signal is met, it is true that the polarization dependent loss exists in the input optical signal.

A person of ordinary skill in the art may understand that all or some of the steps of the foregoing embodiments may be implemented by hardware or a program instructing related hardware. The program may be stored in a computer-readable storage medium. The storage medium may include: a read-only memory, a magnetic disk, or an optical disc.

The foregoing descriptions are merely embodiments of this application, but are not intended to limit this application. Any modification, equivalent replacement, or improvement made within the spirit or principle of this application should fall within the protection scope of this application.

## Claims

1. An optical signal sending method, wherein the method comprises:

   modulating an optical signal in a first state of polarization to obtain a first pilot signal;
   modulating the optical signal in a second state of polarization to obtain a second pilot signal, wherein a phase of the first pilot signal is different from a phase of the second pilot signal; and
   outputting a modulated optical signal, wherein the modulated optical signal carries the first pilot signal and the second pilot signal.

2. The method according to claim 1, wherein that a phase of the first pilot signal is different from a phase of the second pilot signal comprises:
   phases of the first pilot signal and the second pilot signal are reverse.

3. The method according to claim 2, wherein that phases of the first pilot signal and the second pilot signal are reverse comprises:
   phases of pilot signals obtained through modulation in the first state of polarization and the second state of polarization in a same subband are reverse.

4. The method according to claim 3, wherein that phases of pilot signals obtained through modulation in the first state of polarization and the second state of polarization in a same subband are reverse comprises: phases of pilot signals obtained through modulation in the first state of polarization in subbands are all reverse to phases of pilot signals obtained through modulation in the second state of polarization in the subbands.

5. The method according to claim 3, wherein that phases of pilot signals obtained through modulation in the first state of polarization and the second state of polarization in a same subband are reverse comprises: phases of pilot signals obtained through modulation in the first state of polarization in a first subband to an $N^{th}$ subband are reverse to phases of second pilot signals obtained through modulation in the second state of polarization in the first subband to the $N^{th}$ subband, and phases of pilot signals obtained through modulation in the first state of polarization in an $(N+1)^{th}$ subband to a last subband are reverse to phases of pilot signals obtained through modulation in the second state of polarization in the $(N+1)^{th}$ subband to the last subband, wherein N is a positive integer.

6. The method according to claim 3, wherein that phases of pilot signals obtained through modulation in the first state of polarization and the second state of polarization in a same subband are reverse comprises: a phase of a pilot signal obtained through modulation in the first state of polarization in an $A^{th}$ subband is reverse to a phase of a pilot signal obtained through modulation in the second state of polarization in the $A^{th}$ subband, and a phase of a pilot signal obtained through modulation in the first state of polarization in a $B^{th}$ subband is reverse to a phase of a pilot signal obtained through modulation in the second state of polarization in the $B^{th}$ subband, wherein A is an odd number and B is an even number, or A is an even number and B is an odd number.

7. A pilot receiver, wherein the pilot receiver comprises a polarization-maintaining power splitter, a first polarizer, a second polarizer, a first photoelectric detector, a second photoelectric detector, and a processor, wherein

the polarization-maintaining power splitter is configured to receive an input optical signal, output a first optical signal to the first polarizer, and output a second optical signal to the second polarizer, wherein states of polarization of the first optical signal are the same as those of the second optical signal and the input optical signal, and power of the first optical signal is the same as that of the second optical signal; the first polarizer is configured to perform filtering on the states of polarization of the first optical signal, and output, to the first photoelectric detector, a third optical signal obtained through filtering on the states of polarization; the second polarizer is configured to perform filtering on the states of polarization of the second optical signal, and output, to the second photoelectric detector, a fourth optical signal obtained through filtering on the states of polarization, wherein a polarization direction of the first polarizer is not orthogonal to a polarization direction of the second polarizer; the first photoelectric detector is configured to convert the third optical signal into a first electrical signal, and output the first electrical signal to the processor; the second photoelectric detector is configured to convert the fourth optical signal into a second electrical signal, and output the second electrical signal to the processor; and the processor is configured to process the first electrical signal and the second electrical signal to obtain power corresponding to a pilot frequency of an optical signal of each wavelength in the input optical signal.

8. The pilot receiver according to claim 7, wherein a range of an included angle between the polarization direction of the first polarizer and the polarization direction of the second polarizer is 45°±5°.

9. The pilot receiver according to claim 7 or 8, wherein the processor is further configured to: determine information about rotation of state of polarization RSOP of the input optical signal based on the first electrical signal and the second electrical signal.

10. The pilot receiver according to any one of claims 7 to 9, wherein the processor is further configured to: determine a polarization dependent loss PDL of the input optical signal based on the first electrical signal and the second electrical signal.

11. The pilot receiver according to any one of claims 7 to 10, wherein the pilot receiver further comprises a third polarizer and a third photoelectric detector, and a polarization angle of the third polarizer is greater than a polarization angle of the polarizer and less than a second polarization angle;

the polarization-maintaining power splitter is further configured to output a fifth optical signal to the third polarizer, wherein states of polarization of the fifth optical signal are the same as those of the first optical signal, the second optical signal, and the input optical signal, and power of the fifth optical signal is the same as that of the first optical signal and the second optical signal;

the third polarizer is configured to perform filtering on the states of polarization of the fifth optical signal, and output, to the third photoelectric detector, a sixth optical signal obtained through filtering on the states of polarization;

the third photoelectric detector is configured to convert the sixth optical signal into a third electrical signal, and output the third electrical signal to the processor; and

the processor is configured to process the first electrical signal, the second electrical signal, and the third electrical signal to obtain the power corresponding to the pilot frequency of the optical signal of each wavelength in the input optical signal.

12. The pilot receiver according to any one of claims 7 to 11, wherein the pilot receiver further comprises a circular-to-linear polarization converter, a fourth polarizer, and a fourth photoelectric detector;

the polarization-maintaining power splitter is further configured to output a seventh optical signal to the circular-to-linear polarization converter, wherein states of polarization of the seventh optical signal are the same as those of the first optical signal, the second optical signal, and the input optical signal, and power of the seventh optical signal is the same as that of the first optical signal and the second optical signal;

the circular-to-linear polarization converter is configured to convert a state of elliptical polarization of the seventh optical signal into a state of linear polarization, and output, to the fourth polarizer, an eighth optical signal obtained through conversion;

the fourth polarizer is configured to convert the eighth optical signal into a fourth electrical signal, and output the fourth electrical signal to the processor; and

the processor is configured to process the first electrical signal, the second electrical signal, and the fourth electrical signal to obtain the power of a pilot signal corresponding to the optical signal of each wavelength in the input optical signal.

13. The pilot receiver according to claim 12, wherein the circular-to-linear polarization converter is a quarter-wave plate.

14. The pilot receiver according to claim 12 or 13, wherein a polarization angle of the fourth polarizer is the same as a polarization angle of the first polarizer or a polarization angle of the second polarizer.

15. The pilot receiver according to any one of claims 7 to 10, wherein the processor is configured to:

perform Fourier transform on the first electrical signal to obtain first sub-power corresponding to the pilot frequency of the optical signal of each wavelength in the input optical signal;

perform Fourier transform on the second electrical signal to obtain second sub-power corresponding to the pilot frequency of the optical signal of each wavelength in the input optical signal; and

obtain, for each pilot frequency, based on first sub-power and second sub-power that correspond to the pilot frequency, actual power corresponding to the pilot frequency.

16. A pilot receiver, wherein the pilot receiver comprises a polarization-maintaining power splitter, a polarization rotator, a first polarization beam splitter, a second polarization beam splitter, a first photoelectric detector, a second photoelectric detector, a third photoelectric detector, a fourth photoelectric detector, and a processor, wherein

the polarization-maintaining power splitter is configured to receive an input optical signal, output a first optical signal to the polarization rotator, and output a second optical signal to the first polarization beam splitter, wherein states of polarization of the first optical signal are the same as those of the second optical signal and the input optical signal, and power of the first optical signal is the same as that of the second optical signal;

the polarization rotator is configured to rotate polarization of the first optical signal to obtain a third optical signal, and send the third optical signal to the second polarization beam splitter;

the first polarization beam splitter is configured to: polarize and split the second optical signal to obtain a fourth optical signal and a fifth optical signal, output the fourth optical signal to the first photoelectric detector, and output the fifth optical signal to the second photoelectric detector;

the second polarization beam splitter is configured to: polarize and split the third optical signal to obtain a sixth optical signal and a seventh optical signal, output the sixth optical signal to the third photoelectric detector, and output the seventh optical signal to the fourth photoelectric detector;

the first photoelectric detector is configured to convert the fourth optical signal into a first electrical signal, and output the first electrical signal to the processor;

the second photoelectric detector is configured to convert the fifth optical signal into a second electrical signal, and output the second electrical signal to the processor;

the third photoelectric detector is configured to convert the sixth optical signal into a third electrical signal, and output the third electrical signal to the processor;

the fourth photoelectric detector is configured to convert the seventh optical signal into a fourth electrical signal, and output the fourth electrical signal to the processor; and

the processor is configured to process the first electrical signal, the second electrical signal, the third electrical signal, and the fourth electrical signal to obtain power of a pilot signal corresponding to an optical signal of each wavelength in the input optical signal.

17. The pilot receiver according to claim 16, wherein the processor is further configured to:
determine information about RSOP of the input optical signal based on the first electrical signal, the second electrical signal, the third electrical signal, and the fourth electrical signal;

18. The pilot receiver according to claim 16 or 17, wherein the processor is further configured to:
determine a PDL of the input optical signal based on the first electrical signal, the second electrical signal, the third electrical signal, and the fourth electrical signal.

19. A pilot receiver, wherein the pilot receiver comprises a polarization controller, a polarization beam splitter, a first photoelectric detector, a second photoelectric detector, and a processor, wherein

the polarization controller is configured to receive an input optical signal, perform polarization scrambling on the optical signal, and output an optical signal obtained after polarization scrambling to the polarization beam splitter;

the polarization beam splitter is configured to: polarize and split the optical signal obtained after polarization scrambling to obtain a first optical signal and a second optical signal, output the first optical signal to the first photoelectric detector, and output the second optical signal to the second photoelectric detector, wherein the first optical signal is orthogonal to the second optical signal;

the first photoelectric detector is configured to convert the first optical signal into a first electrical signal, and output the first electrical signal to the processor;

the second photoelectric detector is configured to convert the second optical signal into a second electrical signal, and output the second electrical signal to the processor; and

the processor is configured to process the first electrical signal and the second electrical signal to obtain power of a pilot signal corresponding to an optical signal of each wavelength in the input optical signal.

20. The pilot receiver according to claim 19, wherein the processor is further configured to:
determine information about RSOP of the input optical signal based on the first electrical signal and the second electrical signal.

21. The pilot receiver according to claim 19 or 20, wherein the processor is further configured to:
determine a PDL of the input optical signal based on the first electrical signal and the second electrical signal.

22. A transmitter, wherein the transmitter comprises a signal transmitter and a modulator, wherein

the signal transmitter is configured to send an optical signal; and

the modulator is configured to: modulate the optical signal in a first state of polarization to obtain a first pilot signal; modulate the optical signal in a second state of polarization to obtain a second pilot signal, wherein a phase of the first pilot signal is different from a phase of the second pilot signal; and output a modulated optical signal, wherein the modulated optical signal carries the first pilot signal and the second pilot signal.

FIG. 1

FIG. 2

FIG. 3

FIG. 4

FIG. 5

FIG. 6

FIG. 7

EP 4 407 894 A1

0   0   0     0   0   0

...

First state of
polarization

π   π   π     π   π   π

...

Second state of
polarization

FIG. 8

0   π   0     π   0   π

...

First state of
polarization

π   0   π     0   π   0

...

Second state of
polarization

f0   f0+df   f0+2df                    f0+kdf

FIG. 9

0    0    0    0    π    π    π    π

First state of
polarization

... ...

π    π    π    π    0    0    0    0

Second state of
polarization

f0    f0+df    f0+(N−1)df    f0+Ndf    f0+kdf

FIG. 10

```
Polarization-
maintaining
power splitter
```
→ First polarizer → First photoelectric detector → Processor

→ Second polarizer → Second photoelectric detector → Processor

FIG. 11

FIG. 12

```
                  ┌─────────────┐              ┌─────────────┐
                  │    First    │─────────────▶│    First     │─────┐
              ┌──▶│  polarizer  │              │photoelectric │     │
              │   └─────────────┘              │  detector    │     │
              │                                └─────────────┘     │
              │                                                     │
┌──────────┐  │  ┌─────────────┐  ┌──────────┐  ┌─────────────┐     │  ┌──────────┐
│Polarization-│ │ │ Circular-to-│  │          │  │   Fourth    │     └─▶│          │
│maintaining │─┼▶│   linear    │─▶│  Fourth  │─▶│photoelectric│────────▶│Processor │
│  power     │  │ │polarization │  │polarizer │  │  detector   │     ┌─▶│          │
│  splitter  │  │ │ converter   │  │          │  │             │     │  └──────────┘
└──────────┘  │  └─────────────┘  └──────────┘  └─────────────┘     │
              │                                                     │
              │   ┌─────────────┐              ┌─────────────┐      │
              └──▶│   Second    │─────────────▶│   Second    │──────┘
                  │  polarizer  │              │photoelectric│
                  └─────────────┘              │  detector   │
                                               └─────────────┘
```

FIG. 13

FIG. 14

FIG. 15

FIG. 16

## INTERNATIONAL SEARCH REPORT

| | International application No. |
|---|---|
| | **PCT/CN2022/119627** |

**A. CLASSIFICATION OF SUBJECT MATTER**

H04B 10/516(2013.01)i; H04B 10/60(2013.01)i; H04J 14/06(2006.01)i

According to International Patent Classification (IPC) or to both national classification and IPC

**B. FIELDS SEARCHED**

Minimum documentation searched (classification system followed by classification symbols)

H04B; H04J

Documentation searched other than minimum documentation to the extent that such documents are included in the fields searched

Electronic data base consulted during the international search (name of data base and, where practicable, search terms used)

CNPAT, CNKI, WPI, EPODOC: 光信号, 导频, 偏振, 功分器, 光电探测, 偏振旋转, 偏振控制, optical, pilot, polorization, splitter, photo detector, PD, polarization rotator, PR, polorization controller, PC

**C. DOCUMENTS CONSIDERED TO BE RELEVANT**

| Category* | Citation of document, with indication, where appropriate, of the relevant passages | Relevant to claim No. |
|---|---|---|
| X | CN 110291728 A (TELEFONAKTIEBOLAGET LM ERICSSON (PUBL)) 27 September 2019 (2019-09-27) description, paragraphs 0008-0092, and figures 5 and 7 | 1-15, 22 |
| X | CN 105635023 A (BEIJING UNIVERSITY OF POSTS AND TELECOMMUNICATIONS) 01 June 2016 (2016-06-01) description, paragraphs 0124-0155, and figure 3 | 16-18 |
| X | US 2008232816 A1 (FUJITSU LTD.) 25 September 2008 (2008-09-25) description, paragraphs 0006-0079, and figure 1 | 1-6, 19-22 |
| X | EP 2538594 A2 (CIENA CORPORATION) 26 December 2012 (2012-12-26) description, paragraphs 0035-0069 | 1-6, 22 |
| PX | WO 2022089268 A1 (HUAWEI TECHNOLOGIES CO., LTD.) 05 May 2022 (2022-05-05) description, page 13, line 10 to page 14, line 5, and figure 4 | 16-18 |
| A | CN 106161329 A (FUJITSU LTD.) 23 November 2016 (2016-11-23) entire document | 1-22 |
| A | CN 106571867 A (FUJITSU LTD.) 19 April 2017 (2017-04-19) entire document | 1-22 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 November 2022** | **25 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/119627** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 110463080 A (HUAWEI TECHNOLOGIES CO., LTD.) 15 November 2019 (2019-11-15) entire document | 1-22 |

Form PCT/ISA/210 (second sheet) (January 2015)

**INTERNATIONAL SEARCH REPORT**
**Information on patent family members**

International application No.

**PCT/CN2022/119627**

| Patent document cited in search report | | | Publication date (day/month/year) | Patent family member(s) | | | Publication date (day/month/year) |
|---|---|---|---|---|---|---|---|
| CN | 110291728 | A | 27 September 2019 | WO | 2018108235 | A1 | 21 June 2018 |
| | | | | EP | 3552326 | A1 | 16 October 2019 |
| | | | | US | 2020007263 | A1 | 02 January 2020 |
| CN | 105635023 | A | 01 June 2016 | None | | | |
| US | 2008232816 | A1 | 25 September 2008 | JP | 2012110024 | A | 07 June 2012 |
| | | | | JP | 2008263590 | A | 30 October 2008 |
| EP | 2538594 | A2 | 26 December 2012 | US | 2011255870 | A1 | 20 October 2011 |
| WO | 2022089268 | A1 | 05 May 2022 | CN | 114499688 | A | 13 May 2022 |
| CN | 106161329 | A | 23 November 2016 | US | 2016315724 | A1 | 27 October 2016 |
| | | | | JP | 2016208518 | A | 08 December 2016 |
| CN | 106571867 | A | 19 April 2017 | JP | 2017076966 | A | 20 April 2017 |
| | | | | US | 2017104529 | A1 | 13 April 2017 |
| CN | 110463080 | A | 15 November 2019 | WO | 2019028702 | A1 | 14 February 2019 |

Form PCT/ISA/210 (patent family annex) (January 2015)

**EP 4 407 894 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111446802